# EUROPÄISCHE PATENTSCHRIFT

(11) **EP 2 621 974 B1**
(45) Veröffentlichungstag und Bekanntmachung des Hinweises auf die Patenterteilung: **18.11.2015**
(21) Anmeldenummer: 11801963.7
(22) Anmeldetag: 30.09.2011
(51) Int. Cl.: C08G 8/36, B22C 11/00, C08G 18/00, C08G 8/28

(54) **BINDEMITTEL ENTHALTEND SUBSTITUIERTE BENZOLE UND NAPHTHALINE ZUR HERSTELLUNG VON KERNEN UND FORMEN FÜR DEN METALLGUSS, FORMSTOFFMISCHUNG UND VERFAHREN**
BINDER CONTAINING SUBSTITUTED BENZENES AND NAPHTHALENES FOR PRODUCING CORES AND MOLDS FOR METAL CASTING, MOLD MATERIAL MIXTURE, AND METHOD
LIANT CONTENANT DES BENZÈNES ET DES NAPHTALÈNES SUBSTITUÉS POUR FABRIQUER DES NOYAUX ET DES MOULES POUR LA COULÉE DE MÉTAUX, MÉLANGE DE MATIÈRE MOULABLE ET PROCÉDÉ

(30) Priorität: 30.09.2010 DE 102010046981
(43) Veröffentlichungstag der Anmeldung: 07.08.2013
(73) Patentinhaber: ASK Chemicals GmbH, 40721 Hilden (DE)
(72) Erfinder: PRIEBE, Christian, 42489 Wülfrath (DE); KOCH, Diether, 40822 Mettmann (DE)
(74) Vertreter: Müller Schupfner & Partner Patent- und Rechtsanwaltspartnerschaft mbB
(86) Internationale Anmeldenummer: PCT/DE2011/001789
(87) Internationale Veröffentlichungsnummer: WO 2012/041294

(56) Entgegenhaltungen:
- EP-A1- 1 375 028
- DE-A1-102006 037 288
- US-A- 3 632 844
- US-A- 4 590 229
- US-A- 4 634 758

## Beschreibung

Die vorliegende Erfindung betrifft ein Bindemittel auf Polyurethanbasis zur Herstellung von Kernen und Gießformen enthaltend Alkyl- / Alkenylbenzole und gleichzeitig dialkylierte und/oder dialkenylierte Naphthaline mit verzögerter Aushärtung der unkatalysierten Formstoffmischung, insbesondere für Cold-Box-Mischungen.

Die unter der Bezeichnung "Cold-Box-Verfahren" oder "Ashland-Verfahren" bekannt gewordene Methode der Kernherstellung hat in der Gießereiindustrie große Bedeutung erlangt. Zur Bindung eines feuerfesten Formgrundstoffes werden dabei Zwei-Komponenten-Polyurethan-Systeme eingesetzt. Die Polyol-Komponente besteht aus einem Polyol mit mindestens zwei OH-Gruppen pro Molekül, die Isocyanat-Komponente aus einem Polyisocyanat mit mindestens zwei NCO-Gruppen pro Molekül. Die Aushärtung des Bindemittelsystems erfolgt mit Hilfe von basischen Katalysatoren. Flüssige Basen können dem Bindemittelsystem vor der Formgebung zugemischt werden, um die beiden Komponenten zur Reaktion zu bringen (US 3,676,392). Eine weitere Möglichkeit besteht darin, gasförmige tertiäre Amine nach der Formgebung durch das Formstoff-Bindemittelsystem-Gemisch (US 3,409,579) zu leiten.

Nach der US 3,676,392 und der US 3,409,579 werden Phenolharze als Polyole eingesetzt, die durch Kondensation von Phenol mit Aldehyden, vorzugsweise Formaldehyd, in flüssiger Phase bei Temperaturen bis ca. 130°C in Gegenwart katalytischer Mengen von Metallionen erhalten werden. In der US 3,485,797 wird die Herstellung solcher Phenolharze detailliert beschrieben. Außer unsubstituiertem Phenol können substituierte Phenole, vorzugsweise o-Kresol und p-Nonylphenol, zum Einsatz kommen (vergleiche z.B. US 4,590,229). Als weitere Reaktionskomponente werden nach der EP 0177871 A2 mit aliphatischen Monoalkohol-Gruppen mit ein bis acht Kohlenstoffatomen modifizierte Phenolharze eingesetzt. Durch die Alkoxylierung sollen die Bindemittelsysteme eine erhöhte thermische Stabilität besitzen.

Die US 4590229 A offenbart als Lösungsmittel für ein Phenolharz als Komponente eine PU-Harzes innerhalb einer größeren Gruppe u.a. alkyl-substituierte Naphthalene (nach IUPAC, im Deutschen auch Naphthaline genannt), alkylsubstituierte Benzole und deren Mischungen aber keine Dialkyl(en)naphtalene und auch keine Kettenlängen der Alkylreste. Überdies ist der offenbarte Siedepunkt niedriger.

Die US 4634758 A nennt Ethylbenzol und "heavy aromatic naphthas" als Lösungsmittel für die Hydroxy- und/oder die Isocyanat-Komponente. Naphtha ist hier aber als der technische Name für Rohbenzin zu verstehen und umfasst Paraffine, Cycloparaffine und weitere Kohlenwasserstoffe aber nicht Dialkylnaphthalen oder Dialkylennaphthalen, zumindest nicht ausdrücklich.

Die DE 102006037288 A1 offenbart alkyl-substituierte Benzole, alkyl-substituierte Naphthalene und deren Gemische als Lösungsmittel für die Isocyanat-Komponente. Die DE 102006037288 A1 offenbart jedoch nicht die erforderlichen Kettenlängen der Alkyl-/Alkenyl-Reste bzw. Siedepunkte und nicht, dass es sich um dialkylsubstituierte Naphthalene handeln muss.

Die EP 1375028 A1 nennt lediglich allgemein hoch siedende aromatische Kohlenwasserstoffe wie Alkylbenzole, Xylole und Naphthalen als Lösungsmittel für die Isocyanat-Komponente. Für die Hydroxy-Komponente soll im Unterschied ein polares Lösungsmittel eingesetzt werden.

In den Beispielen der US 3632844 A wird lediglich aufgezeigt, dass aromatische Lösungsmittel eingesetzt werden können.

Die obigen Offenbarungen für Lösungsmittel sind jeweils aber nicht gerichtet auf die nach der vorliegenden Erfindung gemeinsam erforderlichen längerkettigen Alkylaromaten und Dialkylnaphthalene. Überdies müssen diese nach der vorliegenden Erfindung nicht notwendig Lösungsmittel für die Hydroxy- und/oder die Isocyanat-Komponente sein.

Als Lösemittel für die Polyol-Komponente werden überwiegend Gemische aus hochsiedenden polaren Lösemitteln (z.B. Ester und Ketone) und hochsiedenden aromatischen Kohlenwasserstoffen eingesetzt. Die Polyisocyanate werden dagegen bevorzugt in hochsiedenden aromatischen Kohlenwasserstoffen gelöst.

In der EP 0771599 A1 und der WO 00/25957 A1 werden Formulierungen beschrieben, bei denen durch Verwendung von Fettsäureestern ganz oder zumindest weitgehend auf aromatische Lösemittel verzichtet werden kann.

Aus verschiedenen Gründen ist es wünschenswert, dass derartige Formstoffmischungen eine sehr lange Verarbeitungszeit besitzen, d.h. dass die beiden Komponenten nur dann miteinander reagieren, wenn sie in Kontakt mit einem Katalysator kommen. Auch wenn sich in dieser Hinsicht seit der Erfindung des "Cold-Box-Verfahrens" viel getan hat, z.B. durch die in US 4,540,724 beschriebene Zugabe von Phosphorhalogeniden zur Polyisocyanatkomponente, besitzen auch mit modernen Binderformulierungen hergestellte Formstoffmischungen eine begrenzte Lebensdauer. Dies macht sich dadurch bemerkbar, dass die Festigkeiten von Formen und Kernen mit zunehmendem Alter der Formstoffmischungen abnehmen und ab einem bestimmten Zeitpunkt den Wert für ein sicheres Handling und für ein gutes Gussergebnis unterschreiten. Die JP 3794944 B2 schlägt einen Zusatz an C₆-C₁₆-Alkylbenzolen vor, um das vorzeitige Aushärten der Formstoffmischung zu verhindern.

Als Konsequenz vorzeitigen Aushärtens müssen in der Praxis immer wieder größere Mengen unbrauchbar gewordener Formstoffmischungen entsorgt werden, z.B. nach unvorhergesehenen Produktionsunterbrechungen. Besonders hoch ist der Reinigungsaufwand von Maschinen, Vorrats- und Transportbehältern dann, wenn die Formstoffmischungen zum Zeitpunkt der Reinigung nicht mehr weich und fließfähig, sondern (teil)ausgehärtet sind.

Von Seiten der Anwender besteht deshalb der Wunsch, Formstoffmischungen zur Verfügung gestellt zu bekommen, die nicht nur eine sehr lange Verarbeitungszeit besitzen, sondern die auch nach Ablauf der Verarbeitungszeit nicht zu einer festen Masse aushärten. Die Formstoffmischungen sollen auch dann noch weich und fließfähig sein, so dass die Kernschießmaschinen etc. leicht gereinigt werden können.

Der Erfindung lag daher die Aufgabe zu Grunde, den Gießereien eine Formstoffmischung für die Herstellung von Formkörpern zur Verfügung zu stellen, bei der die unkatalysierte Aushärtung nicht oder nur in einem sehr geringen Umfang eintritt, so dass die Mischung auch nach mehreren Stunden noch weich und fließfähig bleibt.

Es wurde nun überraschenderweise gefunden, dass durch den Zusatz von Alkyl- / Alkenylbenzolen in Verbindung mit dialkylierten und/oder dialkenylierten Naphthalinen gemäß Anspruch 1 die Aushärtung einer unkatalysierten Cold-Box-Mischung noch stärker verzögert wird als durch die gleiche Menge einer der beiden Substanzgruppen.

Erfindungsgemäß weisen die Alkyl- und/oder Alkenylketten der Alkyl-/Alkenylbenzole und die dialkylierten / dialkenylierten Naphthaline unabhängig voneinander folgende Merkmale auf: Sie sind
- geradzahlig oder ungeradzahlig;
- gesättigt oder ungesättigt, vorzugsweise gesättigt, mit 8 bis 20 C-Atomen (Alkyl-/Alkenylbenzole) bzw. 2 bis 10 C-Atomen (dialkylierten / dialkenylierten Naphthaline);
- verzweigt oder unverzweigt; und / oder
- substituiert oder unsubstituiert, wobei die Substitution aus einem oder mehreren Phenylringen besteht.

Der aromatische Grundkörper kann einfach oder mehrfach substituiert sein, wobei die Alkyl-/Alkenylsubstituenten am selben Grundkörper unterschiedlich sein können.

Die Naphthaline sind dialkyliert und/oder dialkenyliert, vorzugsweise mit jeweils jeweils 2 bis 10 C-Atomen,wie z.B. Diisopropylnaphthalin.

Die Gewichtsanteile Alkyl- / Alkenylbenzole (C) zu dialkylierten und/oder dialkenylierten Naphthalinen (D) verhalten sich relativ zueinander wie folgt C : D : 95 :5 bis 5 : 95, vorzugsweise 85 : 15 bis 15 bis 85, besonders bevorzugt 80 : 20 bis 20: 80

Gegenstand der Erfindung ist somit ein Bindemittel für Formstoffmischungen, z.B. in Form eines 2- oder Mehrkomponentensystems (A) plus (B), enthaltend
(A) zumindest eine Polyol-Komponente aufweisend ein Polyol mit mindestens zwei OH-Gruppen pro Molekül, wobei die Polyol-Komponente zumindest ein Phenolharz umfasst, und
(B) zumindest eine Isocyanat-Komponente aufweisend ein Polyisocyanat mit mindestens.zwei NCO-Gruppen pro Molekül und
(C) zumindest ein Alkyl- / Alkenylbenzol mit einem nach DIN 51761 gemessenen Siedepunkt größer 250°C und besonders bevorzugt größer 260°C oder sogar größer 270°C und
(D) zumindest ein dialkyliertes und/oder dialkenyliertes Naphthalin mit einem Siedepunkt größer 270°C
neben u.a. ggf. einem oder mehreren weiteren Komponenten wie Lösemitteln bzw. Additiven. Die Siedebereiche schließen Substanzen ein, die sich zersetzen bevor sie sieden.

Die Komponenten (C) und (D) sowie etwaige weitere Komponenten wie Lösemittel bzw. Additive bilden insbesondere jeweils unabhängig voneinander einen Bestandteil von entweder (A), (B) oder (A) und (B). Die Komponente (C) und (D) ist vorzugsweise bei Raumtemperatur (20°C) flüssig.;

Gegenstand der Erfindung sind weiterhin Formstoffmischungen gemäß Anspruch 15 und ein Verfahren zur Herstellung eines Gießformteils oder eines Kerns, gemäß Anspruch 16. Bevorzugte Ausführungsformen sind jeweils Gegenstand der Unteransprüche oder nachfolgend beschrieben.

Der Anteil der Kombination Alkyl-/Alkenylbenzol und dialkyliertes/dialkenyliertes Naphthalin im Bindemittel (in Bezug auf das gesamte Bindemittel einschließlich etwaiger weiterer Zusatzstoffe, wie Lösemitteln, Silane und sonstige Additive) beträgt 1 bis 25 Gew.%, bevorzugt 1 bis 20 Gew.% und besonders bevorzugt 1 bis 15 Gew.%.

Nach einer Ausführungsform weisen die Alkyl- und/oder Alkenyl-Reste des/der Alkyl-/ Alkenylbenzole jeweils bevorzugt 8 bis 20 C-Atome und die Reste des/der dialkylierten und/oder dialkenylierten Naphthaline insbesondere jeweils 2 bis 10 C-Atome auf und sind gesättigt oder ungesättigt, vorzugsweise gesättigt.

Die Alkyl-/Alkenylbenzole können monoalkylierte Benzole mit einer gesättigten Alkylkette von 8 bis 20 C-Atomen sein oder enthalten, während die dialkylierten/dialkenylierten Naphthaline bevorzugt dialkylierte Naphthaline sind mit vorzugsweise jeweils 2 bis 10 C-Atomen je Alkyl-/Alkenylrest.

Die Gewichtsanteile Alkyl- / Alkenylbenzole zu alkylierten und/oder alkenylierten Naphthalinen verhalten sich nach einer Ausführungsform relativ zueinander wie 95 :5 bis 5 : 95 vorzugsweise wie 85 : 15 bis 15 : 85, besonders bevorzugt wie 80 : 20 bis 20 : 80.

Ein geeignetes Alkyl- / Alkenylbenzol ist z.B. das Handelsprodukt Marlican® der Firma Sasol Germany GmbH.

Ein geeignetes dialkyliertes und/oder dialkenyliertes Naphthalin ist z.B. das Handelsprodukt Rütasolv® DI der Firma Rütgers Kureha Solvents GmbH.

Der Begriff "alkyliert und/oder alkenyliert" bzw. "Alkyl- / Alkenyl-" schließt jeweils Gruppen ein die mehrfach Aryl-substituiert sind wie Alkylidene (Beispiel -(CH₂)ₘ-) oder Alkenylidene (Beispiel: -(CH₂)ₘ-CH=CH-(CH₂)ₒ-).

Weiterhin betrifft die Erfindung Formstoffmischungen, die feuerfeste Formgrundstoffe und bis zu 5 Gew.%, bevorzugt bis zu 4 Gew.%, besonders bevorzugt bis zu 3 Gew.% des erfindungsgemäßen Bindemittelsystems, bezogen auf das Gewicht der feuerfesten Formgrundstoffe, umfassen.

Als feuerfeste Formgrundstoffe können dabei beispielsweise Quarz-, Zirkon- oder Chromerzsand, Olivin, Schamotte und Bauxit verwendet werden. Weiterhin können auch synthetisch hergestellte Formgrundstoffe verwendet werden, wie z.B. Aluminiumsilikathohlkugeln (sog. Microspheres), Glasperlen, Glasgranulat oder die unter der Bezeichnung "Cerabeads" bzw. "Carboaccucast" bekannten kugelförmigen keramischen Formgrundstoffe. Mischungen der genannten Feuerfeststoffe sind ebenfalls möglich.

Die Erfindung betrifft ebenfalls ein Verfahren zur Herstellung eines Gießformteils oder eines Kerns, umfassend
(a) Vermischen von Feuerfeststoffen mit dem erfindungsgemäßen Bindemittelsystem in einer bindenden Menge von 0,2 bis 5 Gew.%, bevorzugt 0,3 bis 4 Gew.%, besonders bevorzugt 0,4 bis 3 Gew.%, bezogen auf die Menge der Feuerfeststoffe, zum Erhalt eines Gießgemisches;
(b) Einbringen des in Schritt (a) erhaltenen Gießgemisches in ein Formwerkzeug;
(c) Härten des Gießgemisches im Formwerkzeug, um ein selbsttragendes Gießformteil zu erhalten; und
(d) anschließendes Trennen des gehärteten Gießgemisches vom Werkzeug und ggf. weiteres Härten, wodurch man ein hartes, festes, ausgehärtetes Gießformteil erhält.

Die Polyolkomponente weist Phenol-Aldehyd-Harze auf, hier vorliegend verkürzt Phenolharze genannt. Zur Herstellung der Phenolharze sind alle herkömmlich verwendeten Phenol-Verbindungen geeignet. Neben unsubstituierten Phenolen können substituierte Phenole oder Gemische hiervon eingesetzt werden. Die Phenol-Verbindungen sind vorzugsweise entweder in beiden ortho-Positionen oder in einer ortho- und in der para-Position nicht substituiert. Die verbleibenden Ring-Kohlenstoffatome können substituiert sein. Die Wahl des Substituenten ist nicht besonders beschränkt, sofern der Substituent die Reaktion des Phenols mit dem Aldehyd nicht nachteilig beeinflusst. Beispiele substituierter Phenole sind alkylsubstituierte, alkoxysubstituierte, arylsubstituierte und aryloxysubstituierte Phenole.

Die vorstehend genannten Substituenten haben beispielsweise 1 bis 26, bevorzugt 1 bis 15 Kohlenstoffatome. Beispiele geeigneter Phenole sind o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylohenol, p-Amylphenol, Cyclohexylphenol, p-Octylphenol, p-Nonylphenol, Cardanol, 3,5-Dicyclohexylphenol, p-Crotylphenol, p-Phenylphenol, 3,5-Dimethoxyphenol und p-Phenoxyphenol.

Besonders bevorzugt ist Phenol selbst. Auch höher kondensierte Phenole, wie Bisphenol A, sind geeignet. Darüber hinaus eignen sich auch mehrwertige Phenole, die mehr als eine phenolische Hydroxylgruppe aufweisen.

Bevorzugte mehrwertige Phenole weisen 2 bis 4 phenolische Hydroxylgruppen auf. Spezielle Beispiele geeigneter mehrwertiger Phenole sind Brenzkatechin, Resorcin, Hydrochinon, Pyrogallol, Phloroglucin, 2,5-Dimethylresorcin, 4,5-Dimethylresorcin, 5-Methylresorcin oder 5-Ethylresorcin. Es können auch Gemische aus verschiedenen ein- und mehrwertigen und/oder substituierten und/oder kondensierten Phenolkomponenten für die Herstellung der Polyolkomponente verwendet werden.

In einer Ausführungsform werden Phenole der allgemeinen Formel I: 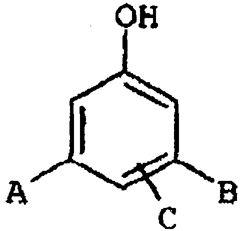 zur Herstellung der Phenolharzkomponente verwendet, wobei A, B und C unabhängig voneinander ausgewählt sind aus: Einem Wasserstoffatom, einem verzweigten oder unverzweigten Alkylrest, der beispielsweise 1 bis 26, vorzugsweise 1 bis 15 Kohlenstoffatome aufweisen kann, einem verzweigten oder unverzweigten Alkoxyrest, der beispielsweise 1 bis 26, vorzugsweise 1 bis 15 Kohlenstoffatome aufweisen kann, einem verzweigten oder unverzweigten Alkenoxyrest, der beispielsweise 1 bis 26, vorzugsweise 1 bis 15 Kohlenstoffatome aufweisen kann, einem Aryl- oder Alkylarylrest, wie beispielsweise Bisphenyle.

Als Aldehyd zur Herstellung der Phenolharzkomponente eignen sich Aldehyde der Formel:

R-CHO,

wobei R ein Wasserstoffatom oder ein Kohlenstoffatomrest mit vorzugsweise 1 bis 8, besonders bevorzugt 1 bis 3 Kohlenstoffatomen ist. Spezielle Beispiele sind Formaldehyd, Acetaldehyd, Propionaldehyd, Furfurylaldehyd und Benzaldehyd. Besonders bevorzugt wird Formaldehyd eingesetzt, entweder in seiner wässrigen Form, als para-Formaldehyd, oder Trioxan.

Um die Phenolharze zu erhalten, wird vorzugsweise eine mindestens äquivalente Molzahl an Aldehyd, bezogen auf die Molzahl der Phenolkomponente, eingesetzt. Bevorzugt beträgt das Molverhältnis Aldehyd zu Phenol 1 : 1,0 bis 2,5: 1, besonders bevorzugt 1,1 : 1 bis 2,2 : 1, insbesondere bevorzugt 1,2 : 1 bis 2,0 : 1.

Die Herstellung des Phenolharzes erfolgt nach dem Fachmann bekannten Verfahren. Dabei werden das Phenol und der Aldehyd unter im Wesentlichen wasserfreien Bedingungen, insbesondere in Gegenwart eines zweiwertigen Metall-ions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Das Phenolharz wird so gewählt, dass eine Vernetzung mit der PolyisocyanatKomponente möglich ist. Für den Aufbau eines Netzwerkes sind Phenolharze, die Moleküle mit mindestens zwei Hydroxylgruppen im Molekül umfassen, notwendig.

Besonders geeignete Phenolharze sind unter der Bezeichnung "ortho-ortho"' oder "high-ortho"-Novolake bzw. Benzyletherharze bekannt. Diese sind durch Kondensation von Phenolen mit Aldehyden in schwach saurem Medium unter Verwendung geeigneter Katalysatoren erhältlich. Zur Herstellung von Benzyletherharzen geeignete Katalysatoren sind Salze zweiwertiger Ionen von Metallen, wie Mn, Zn, Cd, Mg, Co, Ni, Fe, Pb, Ca und Ba. Bevorzugt wird Zinkacetat verwendet. Die eingesetzte Menge ist nicht kritisch. Typische Mengen an Metallkatalysator betragen 0,02 bis 0,3 Gew.%, bevorzugt 0,02 bis 0,15 Gew.%, bezogen auf die Gesamtmenge an Phenol und Aldehyd.

Solche Harze sind z.B. in US 3,485,797 und in EP 1137500 B1 beschrieben, auf deren Offenbarung hiermit sowohl hinsichtlich der Harze selbst, als auch hinsichtlich ihrer Herstellung ausdrücklich Bezug genommen wird.

Die Isocyanat- Komponente des Bindemittelsystems umfasst ein aliphatisches, cycloaliphatisches oder aromatisches Polyisocyanat, bevorzugt mit 2 bis 5 Isocyanatgruppen pro Molekül. Je nach den gewünschten Eigenschaften können auch Gemische von Isocyanaten eingesetzt werden.

Geeignete Polyisocyanate umfassen aliphatische Polyisocyanate, wie z.B. Hexamethylendiisocyanat, alicyclische Polyisocyanate wie z.B. 4,4'-Dicyclohexylmethandiisocyanat und Dimethylderivate hiervon. Beispiele geeigneter aromatischer Polyisocyanate sind Toluol-2,4-diisocyanat, Toluol-2,6-diisocyanat, 1,5-Naphthalendiisocyanat, Triphenylmethantriisocyanat, Xylylendiisocyanat und Methylderivate hiervon, sowie Polymethylenpolyphenylisocyanate. Insbesondere bevorzugte Polyisocyanate sind aromatische Polyisocyanate, besonders bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren und höheren Homologen.

Die Phenolharzkomponente bzw. die Isocyanatkomponente des Bindemittelsystems wird bevorzugt als Lösung in einem organischen Lösemittel oder einer Kombination von organischen Lösemitteln eingesetzt. Lösemittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formstoffes und dessen Rieselfähigkeit zu erhalten.

Als Lösemittel für die Phenolharzkomponente können neben den z.B. unter der Bezeichnung Solvent Naphtha bekannten aromatischen Lösemitteln weiterhin sauerstoffreiche polare, organische Lösemittel verwendet werden. Geeignet sind vor allem Dicarbonsäureester, Glykoletherester, Glykoldiester, Glykoldiether, cyclische Ketone, cyclische Ester (Lactone), cyclische Carbonate oder Kieselsäureester oder deren Mischungen. Bevorzugt werden Dicarbonsäureester, cyclische Ketone und cyclische Carbonate verwendet.

Der Anteil der sauerstoffreichen polaren Lösemitteln am Gesamtbindemittel kann 0 bis 30 Gew.%, insbesondere 1 bis 30 Gew.%, betragen.

Bevorzugte Dicarbonsäureester weisen die Formel R₁OOC-R₂-COOR₁ auf, wobei R₁ jeweils unabhängig voneinander eine Alkylgruppe mit 1 bis 12, bevorzugt 1 bis 6, Kohlenstoffatomen darstellt und R₂ eine Alkylengruppe mit 1 bis 4 Kohlenstoffatomen ist. Beispiele sind Dimethylester von Carbonsäuren mit 4 bis 6 Kohlenstoffatomen, die z.B. unter der Bezeichnung Dibasic Ester von DuPont erhältlich sind. Ebenso sind Phthalate geeignet.

Bevorzugte Glykoletherester sind Verbindungen der Formel R₃-O-R₄-OOCR₅, wobei R₃ eine Alkylgruppe mit 1 bis 4 Kohlenstoffatomen darstellt, R₄ eine Alkylengruppe mit 2 bis 4 Kohlenstoffatomen ist und R₅ eine Alkylgruppe mit 1 bis 3 Kohlenstoffatomen ist, z.B. Butylglykolacetat, bevorzugt sind Glykoletheracetate.

Bevorzugte Glykoldiester weisen entsprechend die allgemeine Formel R₃COO-R₄-OOCR₅ auf, wobei R₃ bis R₅ wie oben definiert sind und die Reste jeweils unabhängig voneinander ausgewählt werden (z.B. Propylenglykoldiacetat). Bevorzugt sind Glykoldiacetate. Glykoldiether lassen sich durch die Formel R₃-O-R₄-O-R₅ charakterisieren, in der R₃ bis R₅ wie oben definiert sind und die Reste jeweils unabhängig voneinander ausgewählt werden (z.B, Dipropylenglykoldimethylether).

Bevorzugte Cyclische Ketone, cyclische Ester und cyclische Carbonate mit 4 bis 5 Kohlenstoffatomen sind ebenfalls geeignet (z.B. Propylencarbonat). Die Alkyl- und Alkylengruppen können jeweils verzweigt oder unverzweigt sein.

Bevorzugte sind auch Fettsäurester wie z.B. Rapsölfettsäuremethylester oder Ölsäurebutylester.

Als Lösemittel für das Polyisocyanat werden entweder aromatische Lösemittel, die oben genannten polaren Lösemittel oder Gemische davon, eingesetzt. Auch Fettsäureester und Kieselsäureester sind geeignet.

Neben den bereits erwähnten Bestandteilen können die Bindemittelsysteme Zusätze enthalten, z. B. Silane (z.B. gemäß EP 1137500 B1) oder interne Trennmittel, z. B. Fettalkohole (z.B. gemäß US 4,602,069), trocknende Öle (z.B. gemäß US 4,268,425) oder Komplexbildner (z.B. gemäß US 5,447,968) oder Gemische davon.

Geeignete Silane sind beispielsweise Aminosilane, Epoxysilane, Mercaptosilane, Hydroxysilane und Ureidosilane, wie γ-Hydroxypropyltrimethoxysilan, γ-Amino-propyltrimethoxysilan, 3-Ureidopropyltriethoxysilan, γ-Mercaptopropyltrimethoxy-silan, γ-Glycidoxypropyltrimethoxysilan, ß-(3,4-Epoxycyclohexyl)trimethoxysilan und N-ß-(Aminoethyl)-y-aminopropyltrimethoxysilan.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander zu dem feuerfesten Formgrundstoff zu geben.

Bevorzugt wird das Polyisocyanat in einer Menge eingesetzt, dass die Anzahl der Isocyanatgruppen von 80 bis 120 %, bezogen auf die Anzahl der freien Hydroxylgruppen des Harzes, beträgt.

Um eine gleichmäßige Mischung der Komponenten der Formstoffmischung zu erzielen, können übliche Verfahren verwendet werden. Die Formstoffmischung kann zusätzlich gegebenenfalls andere konventionelle Bestandteile, wie Eisenoxid, gemahlene Flachsfasern, Holzmehlgranulate, Pech und refraktäre Metalle enthalten.

Als weiteren Gegenstand betrifft die Erfindung ein Verfahren zur Herstellung eines Formkörpers, mit den Schritten:
- Bereitstellen der oben beschriebenen Formstoffmischung;
- Ausformen der Formstoffmischung zu einem Formkörper;
- Aushärten des Formkörpers durch Zugabe eines Aushärtungskatalysators.

Zur Herstellung des Formkörpers wird zunächst wie oben beschrieben das Bindemittel mit dem feuerfesten Formgrundstoff zu einer Formstoffmischung vermischt. Soll die Herstellung des Formkörpers nach dem PU-No-Bake-Verfahren erfolgen, kann der Formstoffmischung auch bereits ein geeigneter Katalysator zugegeben werden. Bevorzugt werden dazu flüssige Amine zur Formstoffmischung gegeben. Diese Amine weisen bevorzugt einen pK_{b}-Wert von 4 bis 11 auf. Beispiele geeigneter Katalysatoren sind 4-Alkylpyridine, wobei die Alkylgruppe 1 bis 4 Kohlenstoffatome umfasst, Isochinolin, Arylpyridine, wie Phenylpyridin, Pyridin, 2-Methoxypyridin, Pyridazin, Chinolin, n-Methylimidazol, 4,4'-Dipyridin, Phenylpropylpyridin, 1-Methylbenzimidazol, 1,4-Thiazin, N,N-Dimethylbenzylamin, Triethylamin, Tribenzylamin, N,N-Dimethyl-1,3-Propandiamin, N,N-Dimethylethanolamin sowie Triethanolamin. Der Katalysator kann gegebenenfalls mit einem inerten Lösemittel verdünnt werden, beispielsweise 2,2,4-Trimethyl-1,3-pentandiol-diisobutyrat, oder einem Fettsäureester. Die Menge des zugegebenen Katalysators wird, bezogen auf das Gewicht der Polyolkomponente, im Bereich von 0,1 bis 15 Gew.% gewählt.

Die Formstoffmischung wird dann mit üblichen Mitteln in eine Form eingebracht und dort verdichtet. Die Formstoffmischung wird anschließend zu einem Formkörper ausgehärtet. Bei der Härtung sollte der Formkörper bevorzugt seine äußere Form behalten.

Gemäß einer weiteren bevorzugten Ausführungsform erfolgt die Aushärtung nach dem PU-Cold-Box-Verfahren. Dazu wird ein gasförmiger Katalysator durch die geformte Formstoffmischung geleitet. Als Katalysator können die üblichen Katalysatoren auf dem Gebiet des Cold-Box-Verfahrens verwendet werden. Besonders bevorzugt werden Amine als Katalysatoren verwendet, insbesondere bevorzugt Dimethylethylamin, Dimethyl-n-propylamin, Dimethylisopropylamin, Dimethyl-n-butylamin, Triethylamin und Trimethylamin in ihrer gasförmigen Form oder als Aerosol.

Der mit dem Verfahren hergestellte Formkörper kann an sich jede auf dem Gebiet der Gießerei übliche Form aufweisen. In einer bevorzugten Ausführungsform liegt der Formkörper in Form von Gießereiformen oder -kernen vor.

Weiter betrifft die Erfindung einen Formkörper, wie er mit dem oben beschriebenen Verfahren erhalten werden kann. Dieser zeichnet sich durch eine hohe mechanische Stabilität aus.

Weiter betrifft die Erfindung die Verwendung dieses Formkörpers für den Metall-guss, insbesondere Eisen- sowie Aluminiumguss.

Die Erfindung wird im Weiteren anhand von bevorzugten Ausführungsformen bzw. näher Versuchsbeispielen erläutert.

### Beispiele

Es wurden die in Tab. 1 aufgeführten Polyisocyanatlösungen hergestellt (jeweils in Gew.%, Summe = 100):

**Tabelle 1**

| | Vergleichsversuche | | | | erfindungsgemäß | | | |
|---|---|---|---|---|---|---|---|---|
| | 1.1 | 1.2 | 1.3 | 1.4 | 1.5 | 1.6 | 1.7 | 1.8 |
| techn. polymeres MDI | 80 | 80 | 80 | 80 | 80 | 80 | 80 | 80 |
| Solvent Naphtha leicht ^{a)} | | | 10 | 10 | | 10 | 10 | 10 |
| Marlican ^{b)} | 20 | | 10 | | 10 | 5 | 7,5 | 2,5 |
| Rütasolv DI ^{c)} | | 20 | | 10 | 10 | 5 | 2,5 | 7,5 |

| | | | | | | | | |
|---|---|---|---|---|---|---|---|---|
| a.) Aral Aromatics GmbH (CAS 64742-95-6), Siedepunkt 165-180°C b.) Alkylbenzol (C₁₀-C₁₆), Sasol Germany GmbH c.) Diisopropylnaphthalin, Rütgers Kureha Solvents GmbH | | | | | | | | |

### Herstellung der Formstoffmischungen Beispiele 1 bis 3

Jeweils 0,8 Gewichtsteile des handelsüblichen, keine aromatischen Lösemittel enthaltenden Cold-Box-Binders Teil 1 Ecocure 300 WM 10 (ASK Chemicals GmbH) wurden mit jeweils 0,8 Gewichtsteilen der in Tab. 1 aufgeführten Isoccyanatlösungen 1.1, 1.2 und 1.5 sowie 100 Gewichtsteilen Quarzsand H 32 (Quarzwerke Frechen GmbH) in einem Labormischer der Fa. Vogel & Schemmann intensiv vermischt.

Von jeder Mischung wurden jeweils 200 g in Probengläser (Volumen 370 ml, Durchmesser 6 cm) gefüllt und diese fest verschlossen. Durch einmaliges Aufklopfen der Gläser auf den Labortisch wurden die Mischungen leicht verdichtet. Nach festgelegten Zeiten wurden die Gläser geöffnet und umgedreht. Die Menge des auslaufenden Sandes wurde gewogen; sie diente als Maß für die Fließfähigkeit der gelagerten Formstoffmischung. Die Ergebnisse sind in Tab. 2 zusammengefasst.

Aus Tab. 2 erkennt man, dass die Kombination aus Alkylbenzol und Dialkylnaphthalin die Formstoffmischung länger fließfähig hält als jede der beiden Substanzen für sich.

**Tabelle 2**

| | | Vergleichsversuche | | erfindungsgemäß |
|---|---|---|---|---|
| | Bsp. | 1 | 2 | 3 |
| | Teil 1 | Ecocure 300 WM 10 | | Ecocure 300 WM 10 |
| Loser Sand [g] nach | Teil 2 | 1.1 | 1.2 | 1.5 |
| 3 Std. | | 120 | 117 | 178 |
| 5 Std. | | 87 | 109 | 164 |
| 7 Std. | | 0 | 98 | 136 |

### Beispiele 4 bis 8

Der Test wurde mit den Isocyanatlösungen 1.3, 1.4, 1.6, 1.7 und 1.8 wiederholt. Die Ergebnisse sind in Tab. 3 zusammengefasst.

**Tabelle 3**

| | | Vergleichsversuche | | erfindungsgemäß | | |
|---|---|---|---|---|---|---|
| | Bsp. | 4 | 5 | 6 | 7 | 8 |
| | Teil 1 | Ecocure 300 WM 10 | | Ecocure 300 WM 10 | | |
| Loser Sand [g] nach | Teil 2 | 1.3 | 1.4 | 1.6 | 1.7 | 1.8 |
| 5 Std. | | 160 | 144 | 193 | 182 | 184 |
| 7 Std. | | 127 | 130 | 180 | 166 | 182 |
| 12 Std. | | 0 | 0 | 170 | 145 | 135 |

Aus Tab. 3 erkennt man, dass die Kombination aus Alkylbenzol und Dialkylnaphthalin auch in Isocyanatlösungen, die ein weiteres Lösemittel enthalten, die Formstoffmischungen länger fließfähig hält als jede der beiden Substanzen für sich.

### Beispiele 9 bis 13

Der Test wurde mit dem handelsüblichen, ein aromatisches Lösemittel enthaltenden Cold-Box-Binder Teil 1 Askocure 366 (ASK Chemicals) wiederhott. Die Ergebnisse sind in Tab. 4 zusammengefasst.

**Tabelle 4**

| | | nicht erfindungsgemäß | | erfindungsgemäß | | |
|---|---|---|---|---|---|---|
| | Bsp. | 9 | 10 | 11 | 12 | 13 |
| | Teil 1 | Askocure 366 | | Askocure 366 | | |
| Loser Sand [g] nach | Teil 2 | 1.3 | 1.4 | 1.6 | 1.7 | 1.8 |
| 5 Std. | | 127 | 114 | 155 | 184 | 172 |
| 7 Std. | | 0 | 108 | 136 | 92 | 93 |
| 10 St. | | 0 | 40 | 105 | 83 | 84 |
| 12 Std. | | 0 | 0 | 75 | 45 | 43 |

Aus Tab. 4 erkennt man, dass die Kombination aus Alkylbenzol und Alkylnaphthalin auch mit dem ein aromatisches Lösemittel enthaltendes Cold-Box-Binder Teil 1 die Formstoffmischung länger fließfähig hält als jede der beiden Substanzen für sich.

## Patentansprüche

1. Bindemittel für Formstoffmischungen enthaltend
(A) zumindest eine Phenolharz-Komponente als Polyol-Komponente aufweisend ein Phenolharz, wobei das Phenolharz erhältlich ist aus der Umsetzung einer Phenol-Verbindung und einer Aldehyd-Verbindung,
(B) zumindest eine Isocyanat-Komponente aufweisend zumindest ein Polyisocyanat mit mindestens zwei NCO-Gruppen pro Molekül und
(C) zumindest ein Alkyl- / Alkenylbenzol mit einem Siedepunkt von größer 250°C und
(D) zumindest ein dialkyliertes und/oder dialkenyliertes Naphthalin mit einem Siedepunkt von größer 270°C.

2. Bindemittel gemäß Anspruch 1, **dadurch gekennzeichnet, dass** der oder die Alkyl- und/oder Alkenyl-Reste des/der Alkyl- / Alkenylbenzole 8 bis 20 C-Atome und die Reste des/der dialkylierten und/oder dialkenylierten Naphthaline jeweils 2 bis 10 C-Atome, aufweisen und gesättigt oder ungesättigt, vorzugsweise gesättigt sind.

3. Bindemittel gemäß Anspruch 1 oder 2, **dadurch gekennzeichnet, dass** die Alkyl-/Alkenylbenzole monoalkylierte Benzole mit einer gesättigten Alkylkette von 8 bis 20 C-Atomen sind.

4. Bindemittel gemäß zumindest einem der vorhergehenden Ansprüche, **dadurch gekennzeichnet, dass** die dialkylierten und/oder dialkenylierten Naphthaline unabhängig voneinander jeweils 2 bis 6 C-Atome je Alkyl-/Alkenylrest aufweisen.

5. Bindemittel gemäß zumindest einem der vorhergehenden Ansprüche, **dadurch gekennzeichnet, dass** sich die Gewichtsanteile Alkyl- / Alkenylbenzole zu dialkylierten und/oder dialkenylierten Naphthalinen relativ zueinander wie 95 :5 bis 5 : 95 vorzugsweise wie 85 : 15 bis 15 : 85, besonders bevorzugt wie 80 : 20 bis 20 : 80, verhalten.

6. Bindemittel gemäß zumindest einem der vorhergehenden Ansprüche, **dadurch gekennzeichnet, dass** der Anteil der Alkyl-/Alkenybenzole und der dialkylierten/ dialkenylierten Naphthaline im Bindemittel zusammen 1 bis 25 %, bevorzugt 1 bis 20 Gew.%, insbesondere 1 bis 15 Gew.%, beträgt.

7. Bindemittel gemäß Anspruch 1, wobei das Polyisocyanat ein aromatisches Polyisocyanat ist, insbesondere ein Polymethylenpolyphenylpolyisocyanat.

8. Bindemittel gemäß Anspruch 1, wobei das Phenolharz erhältlich ist durch Umsetzung einer Phenol-Verbindung mit einer Aldehyd-Verbindung in schwach saurem Medium unter Verwendung von Übergangsmetall- Katalysatoren, insbesondere Zink-Katalysatoren.

9. Bindemittel gemäß Anspruch 8, wobei der Katalysator eine Zink-Verbindung ist, insbesondere Zinkacetat-Dihydrat.

10. Bindemittel gemäß Anspruch 1, wobei das Phenolharz ein Benzyletherharz ist.

11. Bindemittel gemäß Anspruch 1 oder 8, wobei die Phenol-Verbindung ausgewählt ist aus einem oder mehreren Mitgliedern der folgenden Gruppe: Phenol, o-Kresol, p-Kresol, Bisphenol A oder Cardanol.

12. Bindemittel gemäß Anspruch 1 oder 8, wobei die Aldehyd-Verbindung ein Aldehyd der Formel:
R-CHO ,
ist, worin R für ein Wasserstoffatom oder einen Kohlenstoffrest mit vorzugsweise 1 bis 8, besonders bevorzugt 1 bis 3, Kohlenstoffatomen steht.

13. Bindemittel gemäß einem oder mehreren der vorhergehenden Ansprüche, wobei die Komponenten (A) bis (D) wie folgt in dem Bindemittel enthalten sind:
(A) 15 bis 35 Gew.%, insbesondere 20 bis 30 Gew.%, Phenolharz,
(B) 25 bis 45 Gew.%, insbesondere 35 bis 45 Gew.%, Polyisocyanat und
(C)+(D) 1 bis 25 Gew. %, insbesondere 1 bis 15 Gew.%, Alkyl- / Alkenylbenzol in Verbindung mit zumindest einem dialkylierten und/oder dialkenylierten Naphthalin.

14. Bindemittel gemäß einem oder mehreren der vorhergehenden Ansprüche, wobei als weiteres Lösemittel weitere aromatische Kohlenwasserstoffe, sauerstoffreiche polare organische Lösemittel, Ester, Ketone und/oder Weichmacher eingesetzt werden, insbesondere gemeinsam weitere aromatische Kohlenwasserstoffe und sauerstoffreiche polare organische Lösemittel.

15. Bindemittel gemäß einem oder mehreren der vorhergehenden Ansprüche, wobei als weiteres Lösemittel 1 bis 30 Gew.%, sauerstoffreiche polare organische Lösemittel eingesetzt werden.

16. Bindemittel gemäß einem oder mehreren der vorhergehenden Ansprüche, wobei das Bindemittel als 2- oder mehr Komponentensystem vorliegt und zumindest eine Komponente die Komponente (A) ist und zumindest eine weitere Komponente die Komponente (B) und vorzugsweise das zumindest eine Alkyl- / Alkenylbenzol und/oder das zumindest eine dialkylierte und/oder dialkenylierte Naphthalin jeweils unabhängig voneinander Bestandteil der Komponenten (A) und/oder (B) ist.

17. Bindemittel gemäß einem oder mehreren der vorhergehenden Ansprüche, wobei
a) das Alkyl- / Alkenylbenzol einen Siedepunkt von größer 260°C und
b) unabhängig hiervon das dialkylierte und/oder dialkenylierte Naphthalin einen Siedepunkt von größer 270°C
aufweist.

18. Formstoffmischung enthaltend das Bindemittel gemäß einem oder mehreren der vorhergehenden Ansprüche und einen feuerfesten Formstoff, wobei der Formstoff enthält oder besteht aus Siliciumdioxid, z.B. in der Form von Quarz-, Zirkon- oder Chromerzsand, Olivin, Schamotte, Bauxit, Aluminiumsilikathohlkugeln, Glasperlen, Glasgranulat und/oder synthetischen keramischen Formgrundstoffen.

19. Verfahren zur Herstellung eines Gießformteils oder eines Kerns, umfassend
(a) Vermischen von Feuerfeststoffen mit dem Bindemittel gemäß einem der Ansprüche 1 bis 17 in einer Menge von 0,2 bis 5 Gew,%, bevorzugt 0,3 bis 4 Gew.%, besonders bevorzugt 0,4 bis 3 Gew.%, bezogen auf die Menge der Feuerfeststoffe, zum Erhalt eines Gießgemisches;
(b) Einbringen des Gießgemischs in ein Formwerkzeug;
(c) Härten des Gießgemischs im Formwerkzeug, um eine selbsttragende Form zu erhalten; und
(d) anschließendes Trennen des gehärteten Gießformteils vom Werkzeug und ggf. weiteres Härten, wodurch man ein festes, ausgehärtetes Gießformteil erhält.

20. Verfahren gemäß Anspruch 19, wobei zum Aushärten eingesetzt wird Dimethylethylamin, Dimethyl-n-propylamin, Dimethylisopropylamin, Dimethyl-n-butylamin, Triethylamin und/oder Trimethylamin, jeweils gasförmig oder als Aerosol.

21. Verfahren gemäß Anspruch 19, wobei zum Aushärten ein flüssiger Katalysator eingesetzt wird, insbesondere Phenylpropylpyridin.

## Claims

1. A binder for mold material mixtures, containing
(A) at least one phenolic resin component as the polyol component comprising a phenolic resin, wherein the phenolic resin is obtainable from the reaction between a phenol compound and an aldehyde compound,
(B) at least one isocyanate component containing at least one polyisocyanate with at least two NCO groups per molecule, and
(C) at least one alkyl/alkenyl benzene with a boiling point above 250 °C, and
(D) at least one dialkylated and/or dialkenylated naphthalene with a boiling point above 270 °C.

2. The binder according to claim 1, **characterized in that** the one or more alkyl and/or alkenyl radicals of the alkyl/alkenyl benzene(s) has/have 8 to 20 C atoms, and the radicals of the dialkylated and/or dialkenylated naphthalene(s) each has/have 2 to 10 C atoms, and are saturated or unsaturated, preferably saturated.

3. The binder according to claim 1 or 2, **characterized in that** the alkyl/alkenyl benzenes are monoalkylated benzenes with a saturated alkyl chain of 8 to 20 C atoms.

4. The binder according to at least one of the preceding claims, **characterized in that** the dialkylated and/or dialkenylated naphthalenes each comprise 2 to 6 C atoms for each alkyl/alkenyl radical independently of each other.

5. The binder according to at least one of the preceding claims, **characterized in that** the weight proportions of alkyl/alkenyl benzenes to dialkylated and/or dialkenylated naphthalenes are in the following ratios to each other: 95 : 5 to 5 : 95, preferably 85 : 15 to 15 to 85, particularly preferably 80 : 20 to 20 : 80.

6. The binder according to at least one of the preceding claims, **characterized in that** the proportion of alkyl/alkenyl benzenes and dialkylated/dialkenylated naphthalenes in combination is 1 to 25% by weight, preferably 1 to 20% by weight, and particularly preferably 1 to 15% by weight in the binder.

7. The binder according to claim 1, wherein the polyisocyanate is an aromatic polyisocyanate, particularly a polymethylene polyphenyl polyisocyanate.

8. The binder according to claim 1, wherein the phenolic resin is obtainable by reacting a phenol compound with an aldehyde compound in a weakly acidic medium and using transition metal catalysts, particularly zinc catalysts.

9. The binder according to claim 8, wherein the catalyst is a zinc compound, particularly zinc acetate dihydrate.

10. The binder according to claim 1, wherein the phenolic resin is a benzylether resin.

11. The binder according to claim 1 or 8, wherein the phenol compound is selected from one or more members of the following group: phenol, o-cresol, p-cresol, bisphenol A or cardanol.

12. The binder according to claim 1 or 8, wherein the aldehyde compound is an aldehyde having formula:
R-CHO,
wherein R stands for a hydrogen atom or a carbon radical having preferably 1 to 8, particularly preferably 1 to 3 carbon atoms.

13. The binder according to one or more of the preceding claims, wherein the components (A) to (D) are contained in the binder as follows:
(A) 15 to 35% by weight, particularly 20 to 30% by weight phenolic resin,
(B) 25 to 45% by weight, particularly 35 to 45% by weight polyisocyanate, and
(C)+(D) 1 to 25% by weight, particularly 1 to 15% by weight alkyl/alkenyl benzene in conjunction with at least one dialkylated and/or dialkenylated naphthalene.

14. The binder according to one or more of the preceding claims, wherein additional aromatic hydrocarbons, oxygen-rich, polar, organic solvents, esters, ketones and/or plasticizers, particularly additional aromatic hydrocarbons, oxygen-rich, polar, organic solvents together, are used as a further solvent.

15. The binder according to one or more of the preceding claims, wherein 1 to 30% by weight oxygen-rich, polar, organic solvents are used as a further solvent.

16. The binder according to one or more of the preceding claims, wherein the binder is in the form of a 2- or multiple component system and at least one component is component (A) and at least one other component is component (B) and preferably the at least one alkyl/alkenyl benzene and/or the at least one dialkylated and/or dialkenylated naphthalene are constituents of the respective components (A) and/or (B) independently of one another.

17. The binder according to one or more of the preceding claims, wherein
a) the alkyl/alkenyl benzene has a boiling point higher than 260 °C, and
b) independently thereof the dialkylated and/or dialkenylated naphthalene has a boiling point higher than 270 °C.

18. A mold material mixture comprising the binder according to one or more of the preceding claims and a refractory mold material, wherein the mold material contains or consists of silicon dioxide for example in the form of quartz sand, zirconium sand or chromium sand, olivine, refractory clay, bauxite, aluminum silicate hollow spheres, glass beads, granulated glass, and/or synthetic ceramic mold base materials.

19. A method for producing a casting mold element or a core, comprising:
(a) mixing refractory materials with the binder according to any of claims 1 to 17 in a quantity from 0.2 to 5% by weight, preferably 0.3 to 4% by weight, particularly preferably 0.4 to 3% by weight, relative to the quantity of the refractory materials, to obtain a casting mixture;
(b) introducing the casting mixture into a molding tool;
(c) hardening the casting mixture in the molding tool to obtain a self-supporting mold; and
(d) subsequently separating the hardened casting mold element from the tool, and optionally hardening further to obtain a solid, cured casting mold element.

20. The method according to claim 19, wherein dimethyl ethylamine, dimethyl-n-propylamine, dimethyl isopropylamine, dimethyl-n-butylamine, triethylamine and/or trimethylamine is used for curing, each being used as a gas or an aerosol.

21. The method according to claim 19, wherein a liquid catalyst, particularly phenylpropyl pyridine is used for curing.

## Revendications

1. Liant pour des mélanges de moulage comprenant :
(A) au moins un composant résine phénolique en tant que composant polyol présentant une résine phénolique, ladite résine phénolique pouvant être obtenue grâce à la réaction d'un composé phénol et d'un composé aldéhyde,
(B) au moins un composant isocyanate présentant au moins un polyisocyanate avec au moins deux groupes NCO par molécule, et
(C) au moins un alkyl-/alcénylbenzène ayant un point d'ébullition supérieur à 250°C et
(D) au moins un naphtalène dialkylé et/ou dialcénylé ayant un point d'ébullition supérieur à 270°C.

2. Liant selon la revendication 1, **caractérisé en ce que** le ou les radicaux alkyles et/ou alcényles du/des alkyl-/alcénylbenzènes possèdent 8 à 20 atomes de C et les radicaux du/des naphtalènes dialkylés et/ou dialcénylés possèdent respectivement 2 à 10 atomes de C et sont saturés ou insaturés, de préférence saturés.

3. Liant selon la revendication 1 ou 2, **caractérisé en ce que** les alkyl-/alcénylbenzènes sont des benzènes monoalkylés ayant une chaîne alkyle saturée de 8 à 20 atomes de C.

4. Liant selon au moins une des revendications précédentes, **caractérisé en ce que** les naphtalènes dialkylés et/ou dialcénylés présentent, indépendamment les uns des autres, respectivement de 2 à 6 atomes de C par radical alkyle/alcényle.

5. Liant selon au moins une des revendications précédentes, **caractérisé en ce que** les proportions en poids des alkyl/alcénylbenzènes sur les naphtalènes dialkylés et/ou dialcénylés présentent un rapport les uns vis-à-vis des autres par exemple de 95/5 à 5/95, de préférence de 85/15 à 15/85, particulièrement préférentiellement de 80/20 à 20/80.

6. Liant selon au moins une des revendications précédentes, **caractérisé en ce que** la proportion des alkyl/alcénylbenzènes et des naphtalènes dialkylés et/ou dialcénylés dans le liant atteint conjointement 1 à 25 %, de préférence 1 à 20 % en poids, en particulier 1 à 15 % en poids.

7. Liant selon la revendication 1, dans lequel le polyisocyanate est un polyisocyanate aromatique, en particulier un polyisocyanate de polyméthylène polyphényle.

8. Liant selon la revendication 1, dans lequel la résine phénolique peut être obtenue par réaction d'un composé phénolique avec un composé aldéhyde dans un milieu faiblement acide en utilisant des catalyseurs de métaux de transition, en particulier des catalyseurs de zinc.

9. Liant selon la revendication 8, dans lequel le catalyseur est un composé de zinc, en particulier l'acétate de zinc dihydraté.

10. Liant selon la revendication 1, dans lequel la résine phénolique est une résine d'éther benzylique.

11. Liant selon la revendication 1 ou 8, dans lequel le composé phénolique est choisi parmi un ou plusieurs éléments du groupe suivant : phénol, o-crésol, p-crésol, bisphénol A ou cardanol.

12. Liant selon la revendication 1 ou 8, dans lequel le composé aldéhyde est un aldéhyde de formule :
R-CHO,
dans laquelle R est un atome d'hydrogène ou un radical carbone ayant de préférence de 1 à 8, particulièrement préférentiellement de 1 à 3 atomes de carbone.

13. Liant selon une ou plusieurs des revendications précédentes, dans lequel les composants (A) à (D) sont présents dans le liant en les proportions suivantes :
(A) 15 à 35 % en poids, en particulier 20 à 30 % en poids de résine phénolique,
(B) 25 à 45 % en poids, en particulier 35 à 45 % en poids de polyisocyanate, et
(C) + (D) 1 à 25 % en poids, en particulier 1 à 15 % en poids d'alkyl/alcénylbenzène en relation avec au moins un naphtalène dialkylé et/ou dialcénylé.

14. Liant selon une ou plusieurs des revendications précédentes, dans lequel on utilise comme autre solvant d'autres hydrocarbures aromatiques, des solvants organiques polaires riches en oxygène, des esters, des cétones et/ou des plastifiants, en particulier conjointement d'autres hydrocarbures aromatiques et des solvants organiques polaires riches en oxygène.

15. Liant selon une ou plusieurs des revendications précédentes, dans lequel on utilise comme autre solvant 1 à 30 % en poids de solvants organiques polaires riches en oxygène.

16. Liant selon une ou plusieurs des revendications précédentes, dans lequel le liant se présente sous forme d'un système bi-composant ou multi-composant et au moins un composant est le composant (A) et au moins un autre composant est le composant (B) et de préférence le au moins un alkyl/alcénylbenzène et/ou le au moins un naphtalène dialkylé et/ou dialcénylé fait partie, respectivement indépendamment l'un de l'autre, des composants (A) et/ou (B).

17. Liant selon une ou plusieurs des revendications précédentes, dans lequel
a) l'alkyl/alcénylbenzène a un point d'ébullition supérieur à 260°C et
b) indépendamment de celui-ci, le naphtalène dialkylé et/ou dialcénylé présente un point d'ébullition supérieur à 270°C.

18. Mélange de matières de moulage comprenant le liant selon une ou plusieurs des revendications précédentes et une matière de moulage réfractaire, la matière de moulage contenant ou se composant de dioxyde de silicium, par exemple sous la forme de sable de minerai de quartz, de zircon ou de chrome, d'olivine, d'argile réfractaire, de bauxite, de billes creuses de silicate d'aluminium, de perles de verre, de granulés de verre et/ou de matières premières de moulage céramiques synthétiques.

19. Procédé de fabrication d'une pièce d'un moule ou d'un noyau, comprenant les étapes consistant à :
(a) mélanger des matières réfractaires avec le liant selon une des revendications 1 à 17 en une quantité de 0,2 à 5 % en poids, de préférence 0,3 à 4 % en poids, particulièrement préférentiellement 0,4 à 3 % en poids, par rapport à la quantité de matières réfractaires, pour l'obtention d'un mélange de moulage ;
(b) introduire le mélange de moulage dans un outil de formage ;
(c) durcir le mélange de moulage dans l'outil de formage pour obtenir un moule autoportant ; et
(d) séparer ensuite la pièce de moule durcie de l'outil et, le cas échéant, durcir encore une fois, ce qui permet d'obtenir une pièce de moule solide durcie.

20. Procédé selon la revendication 19, dans lequel on utilise pour le durcissement la diméthyléthylamine, la diméthyl-n-propylamine, la diméthylisopropylamine, la diméthyl-n-butylamine, la triéthylamine et/ou la triméthylamine, respectivement sous forme gazeuse ou sous forme d'aérosol.

21. Procédé selon la revendication 19, dans lequel on utilise un catalyseur liquide pour le durcissement, en particulier la phénylpropylpyridine.
